# FASCICULE DE BREVET EUROPEEN

(11) **EP 4 176 175 B1**
(45) Date de publication et mention de la délivrance du brevet: **24.07.2024**
(21) Numéro de dépôt: 21736327.4
(22) Date de dépôt: 30.06.2021
(51) Int. Cl.: F15B 7/00, F15B 21/00, F15B 21/044, B64C 25/00

(54) **PROCÉDÉ DE REMPLISSAGE D'UN CIRCUIT HYDRAULIQUE D'UN SYSTÈME ÉLECTRO-HYDROSTATIQUE METTANT EN OEUVRE UN DISPOSITIF DE REMPLISSAGE**
VERFAHREN ZUM BEFÜLLEN EINES HYDRAULIKKREISLAUFS EINES ELEKTRO-HYDROSTATISCHEN SYSTEMS MIT EINER BEFÜLLEINRICHTUNG
METHOD FOR FILLING A HYDRAULIC CIRCUIT OF AN ELECTRO-HYDROSTATIC SYSTEM USING A FILLING DEVICE

(30) Priorité: 02.07.2020 FR 2007034
(43) Date de publication de la demande: 10.05.2023
(73) Titulaire: Safran Landing Systems, 78140 Vélizy-Villacoublay (FR)
(72) Inventeur: ROGER, Jean-Charles, 77550 Moissy-Cramayel (FR); KAMIS, Jean-Baptiste, 77550 Moissy-Cramayel (FR); PRADO, Thomas, 77550 Moissy-Cramayel (FR)
(74) Mandataire: Cabinet Boettcher
(86) Numéro de dépôt international: PCT/EP2021/068040
(87) Numéro de publication internationale: WO 2022/003043

(56) Documents cités:
- EP-A2- 1 820 975
- WO-A1-2019/072715
- WO-A2-2009/000253
- DE-A1- 2 254 814
- US-A- 3 538 682

## Description

L'invention concerne le domaine des système électro-hydrostatiques (également appelés électro-hydrauliques) et plus particulièrement un procédé de remplissage d'un circuit hydraulique d'un système électro-hydrostatique mettant en œuvre un dispositif de remplissage.

### ARRIERE PLAN DE L'INVENTION

Il est connu d'équiper un aéronef de systèmes électro-hydrostatiques communément appelés EHA (de l'anglais « Electro Hydrostatic Actuator ») pour générer localement de l'énergie hydraulique destinée à actionner des parties mobiles de l'aéronef telles que les ailerons, le gouvernail ou les trains d'atterrissage. Un tel système est par exemple connu du document FR-A-2836671. Les systèmes EHA permettent de s'affranchir de la présence d'un réseau hydraulique parcourant la totalité de l'aéronef et donc d'améliorer la fiabilité de l'aéronef tout en réduisant de manière significative sa masse.

Un système EHA comporte conventionnellement un actionneur hydraulique tel qu'un vérin, une pompe hydraulique entraînée par un moteur électrique, et un circuit hydraulique reliant la pompe au vérin. La pompe hydraulique met sous pression un fluide de travail contenu dans le circuit (généralement de l'huile hydraulique) pour augmenter la pression dans une chambre du vérin et le faire fonctionner. Le système EHA forme ainsi une unité hydraulique autonome contenant sa propre réserve de fluide, ce qui en facilite la maintenance.

Néanmoins, une pompe hydraulique est sensible à la cavitation. Il est donc nécessaire, lors du remplissage du circuit du système EHA, d'évacuer au maximum l'air présent dans ledit circuit sous peine d'endommager gravement la pompe. Pour cela, il est d'usage d'actionner « manuellement » plusieurs fois le vérin lors du remplissage du circuit. Cependant, de tels actionnements peuvent être difficiles et complexes à réaliser, notamment dans le cas d'un système EHA dédié à la remontée d'un train d'atterrissage. Qui plus est, leur efficacité s'avère limitée, de l'air restant généralement emprisonné dans des cavités du circuit et/ou du vérin.

Par ailleurs, lorsque la pompe hydraulique est une pompe de gavage, le circuit du système EHA doit être rempli à une pression prédéterminée pour garantir le bon fonctionnement de la pompe.

Un autre procédé de remplissage selon l'art antérieur est connu du document WO 2009/000253 A2.

### OBJET DE L'INVENTION

L'invention a donc pour objet de proposer un procédé de remplissage d'un circuit hydraulique d'un système électro-hydrostatique pour remplir de manière fiable et efficace le circuit du système électro-hydrostatique sans opération de maintenance lourde.

### RESUME DE L'INVENTION

A cet effet, on prévoit un procédé de remplissage d'un circuit hydraulique d'un système électro-hydrostatique pourvu d'une vanne de purge et d'une vanne de remplissage selon la revendication 1. Selon l'invention, le procédé met en oeuvre un dispositif de remplissage comprenant :
- un générateur de vide agencé pour être raccordé par une première vanne d'isolement à la vanne de purge pour éliminer l'air ou les gaz présents dans le circuit ; et
- une source d'alimentation en fluide hydraulique sous pression agencée pour être raccordée par une deuxième vanne d'isolement à la vanne de remplissage, et par une troisième vanne d'isolement à la vanne de purge et à la première vanne d'isolement pour remplir le circuit de fluide hydraulique.

Le générateur de vide permet d'établir le vide dans le circuit hydraulique du système électro-hydrostatique et donc d'évacuer efficacement l'air ou les gaz contenus dans ledit circuit avant de procéder à son remplissage à l'aide de la source d'alimentation en fluide hydraulique. Il n'est ainsi pas nécessaire d'actionner manuellement le système électro-hydrostatique pour le protéger de la cavitation. La maintenance et le remplacement d'un système électro-hydrostatique s'en trouvent dès lors facilités.

Selon une caractéristique particulière de l'invention, le générateur de vide comporte une pompe à vide reliée à la première vanne d'isolement par un séparateur liquide/gaz.

Selon une autre caractéristique particulière de l'invention, la source d'alimentation en fluide hydraulique comprend une pompe de remplissage reliée à un réservoir d'une contenance supérieure à celle du circuit hydraulique du système électro-hydrostatique.

Selon un mode de réalisation particulier de l'invention, le générateur de vide et la source d'alimentation en fluide hydraulique sont montés sur un chariot mobile.

De manière particulière, le chariot est un chariot élévateur.

Selon l'invention, le procédé comprend également les étapes suivantes :
- raccorder la première et la troisième vanne d'isolement à la vanne de purge, et raccorder la deuxième vanne d'isolement à la vanne de remplissage ;
- alors que les deuxième et troisième vannes d'isolement sont fermées, ouvrir la vanne de remplissage, la vanne de purge et la première vanne d'isolement et mettre en fonctionnement le générateur de vide ;
- une fois le vide établi dans le circuit, ouvrir la deuxième vanne d'isolement de manière à remplir le circuit de fluide hydraulique sous pression alors que le générateur de vide est toujours en cours fonctionnement ;

- une fois le circuit rempli de fluide, fermer la première vanne d'isolement puis ouvrir la troisième vanne d'isolement pour contourner le générateur de vide et faire circuler le fluide à travers le système électro-hydrostatique jusqu'à ce que le fluide contenu dans le circuit atteigne une pression prédéterminée ;
- fermer la vanne de purge et la vanne de remplissage.

De manière particulière, le système électro-hydrostatique comprend une pluralité d'actionneurs sélectionnables par au moins deux distributeurs et le procédé comprend l'étape de piloter successivement les distributeurs les uns après les autres pour établir le vide dans le circuit hydraulique, et l'étape de piloter les distributeurs selon une séquence prédéterminée pour remplir le circuit hydraulique.

### BREVE DESCRIPTION DES DESSINS

L'invention sera mieux comprise à la lumière de la description qui suit, laquelle est purement illustrative et non limitative, et doit être lue en regard du dessin unique annexé :

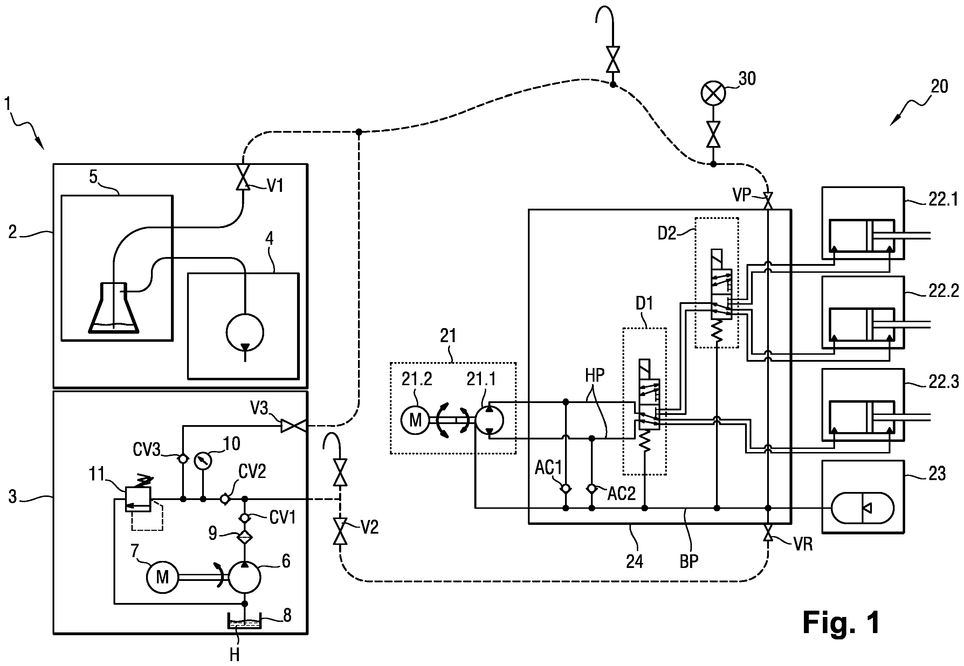

- la figure 1 est une vue schématique d'un dispositif de remplissage selon un mode de réalisation particulier de l'invention, raccordé au circuit hydraulique d'un système électro-hydrostatique ;

### DESCRIPTION DETAILLEE DE L'INVENTION

En référence à la figure 1, l'invention est ici décrite en application au remplissage d'un circuit hydraulique d'un système électro-hydrostatique 20 destiné à actionner des parties mobiles d'un aéronef.

Le système électro-hydrostatique 20 comprend un groupe motopompe 21, trois vérins 22.1, 22.2, 22.3 hydrauliques, un accumulateur 23 hydraulique et un circuit de distribution 24 en fluide hydraulique reliant le groupe motopompe 21 aux vérins 22.1, 22.2, 22.3 et à l'accumulateur 23.

Le groupe motopompe 21 comporte une pompe 21.1 hydraulique entraînée par un moteur 21.2 électrique. La pompe 21.1 est une pompe rotative à deux sens de flux qui est configurée pour aspirer le fluide hydraulique à travers un orifice et la refouler à travers un autre orifice. Le moteur 21.2 est un moteur triphasé configuré pour recevoir de l'énergie électrique fournie par une source d'alimentation électrique et être piloté par un contrôleur non représenté ici.

De manière connue en soi, chaque vérin 22.1, 22.2, 22.3 comprend un cylindre définissant un volume séparé en deux chambres isolées l'une de l'autre par un piston. Deux orifices permettent d'introduire ou d'évacuer un fluide dans l'une ou l'autre des deux chambres par l'intermédiaire d'une différence de pression induite par la pompe 21.1 et donc de déplacer le piston. Une tige est fixée au piston et permet de transmettre un effort destiné à actionner l'une des parties mobiles de l'aéronef.

Le circuit de distribution 24 comprend un circuit haute pression HP reliant la pompe 21.1 aux vérins 22.1, 22.2, 22.3 pour alimenter lesdits vérins en fluide sous pression. Le circuit haute pression HP comporte deux distributeurs D1, D2 monostables permettant de déplacer sélectivement le piston des vérins 22.1, 22.2, 22.3.

Le distributeur D1 a deux premiers ports reliés aux orifices de la pompe 21.1 et quatre deuxièmes ports dont deux sont reliés aux chambres du vérin 22.1 et deux autres à deux premiers ports du distributeur D2. Le distributeur D2 a quatre deuxièmes ports dont deux sont reliés aux chambres du vérin 22.2 et deux autres aux chambres du vérin 22.3.

Le distributeur D1 comprend de façon connue en elle-même un tiroir pouvant adopter deux états : un état de repos (illustré à la figure 1) dans lequel le tiroir assure une connexion entre la pompe 21.1 et le vérin 22.1, et un état de dérivation dans lequel le tiroir assure une connexion entre la pompe 21.1 et le distributeur D2.

L'état du distributeur D1 est commandé par un électro-aimant disposé à une extrémité dudit distributeur D1, de sorte qu'une tension électrique générée par une unité de commande déplace le tiroir pour permettre au distributeur D1 de passer de l'état de repos à l'état de dérivation.

Le distributeur D2 comprend de façon connue en elle-même un tiroir pouvant adopter deux états : un état de repos (illustré à la figure 1) dans lequel le tiroir assure une connexion entre le distributeur D1 et le vérin 22.2 et un état de dérivation dans lequel le tiroir assure une connexion entre le distributeur D1 et le vérin 22.3.

L'état du distributeur D2 est commandé par un électro-aimant disposé à une extrémité dudit distributeur D2, de sorte qu'une tension électrique générée par l'unité de commande déplace le tiroir pour permettre au distributeur D2 de passer de l'état de repos à l'état de dérivation.

Le circuit de distribution 24 comprend également un circuit basse pression BP reliant l'accumulateur 23 à la pompe 21.1 afin de garantir une réserve de fluide hydraulique sous pression dans ledit circuit de distribution 24 pour compenser l'asymétrie des chambres des vérins 22.1, 22.2, 22.3, assurer le gavage de la pompe 21.1 et palier aux dilations thermiques du circuit de distribution 24. Le circuit basse pression BP comporte en partie basse une vanne de remplissage VR et en partie haute une vanne de purge VP. Deux clapets anti-retour AC1, AC2 relient le circuit basse pression BP au circuit haute pression HP afin de permettre un équilibrage des flux pour garantir le gavage de la pompe 21.1 et la réalimentation des chambres des 22.1, 22.2, 22.3.

Le dispositif de remplissage selon l'invention, généralement désigné en 1, comprend un générateur de vide 2 et une source d'alimentation en fluide hydraulique 3 sous pression.

Le générateur de vide 2 comprend une pompe à vide 4 reliée à une première vanne V1 d'isolement par un séparateur liquide/gaz 5. La pompe à vide 4 fournit une pression minimum de 10 millibars (mbar) à l'aspiration.

Le générateur de vide 2 est raccordé par la première vanne V1 d'isolement à la vanne de purge VP du système électro-hydrostatique 20.

La source d'alimentation en fluide hydraulique 3 comprend une pompe de remplissage 6 alimentée par un moteur électrique 7. La pompe de remplissage 6 a un orifice d'entrée relié à un réservoir 8 de fluide hydraulique H respectant la norme AS4059 pour permettre son cyclage et à une troisième vanne V3 d'isolement via un clapet anti-retour CV3, et a un orifice de sortie relié à une deuxième vanne V2 d'isolement via un clapet anti-retour CV1. Le réservoir 8 a une contenance supérieure à celle du circuit de distribution 24 du système électro-hydrostatique 20. La pompe de remplissage 6 fournit une pression supérieure ou égale à une pression prédéterminée du circuit de distribution 24 au repos.

Un filtre 9 est disposé entre l'orifice de sortie de la pompe de remplissage 6 et un orifice d'entrée du clapet anti-retour CV1 afin d'éviter toute pollution du fluide hydraulique H injectée dans le circuit de distribution 24 du système électro-hydrostatique 20. Un manomètre 10 et un clapet anti-retour CV2 sont également disposés entre un orifice de sortie du clapet anti-retour CV1 et un orifice de sortie du clapet anti-retour CV3 pour contrôler la pression et le sens de circulation du fluide hydraulique H dans la source d'alimentation en fluide hydraulique 3.

La source d'alimentation en fluide hydraulique 3 comprend également un régulateur de pression 11 disposé entre l'orifice de sortie du clapet anti-retour CV3 et l'orifice d'entrée de la pompe de remplissage 6 pour permettre d'ajuster manuellement la pression du fluide hydraulique H contenu dans le circuit de distribution 24 à l'aide du manomètre 10.

Le fonctionnement du dispositif de remplissage 1 va maintenant être détaillé.

La vanne de purge VP du système électro-hydrostatique 20 est raccordée à la première vanne V1 d'isolement du générateur de vide 2 et à la troisième vanne V3 d'isolement de la source d'alimentation en fluide hydraulique 3.

La vanne de remplissage VR du système électro-hydrostatique 20 est raccordée à la deuxième vanne V2 d'isolement de la source d'alimentation en fluide hydraulique 3.

Alors que les deuxième et troisième vannes V2, V3 d'isolement sont fermées, la vanne de remplissage VR, la vanne de purge VP et la première vanne V1 d'isolement sont ouvertes. Le générateur de vide 2 est ensuite mis en route de manière à réaliser le vide dans le circuit basse pression BP et dans la portion du circuit haute pression HP avec laquelle le générateur de vide 2 communique lorsque le distributeur D1 est à l'état de repos.

Afin de réaliser le vide dans la totalité du circuit haute pression HP, les distributeurs D1, D2 sont commandés l'un après l'autre pour passer de l'état repos à l'état de dérivation.

Pour mesurer le vide, un manomètre 30 est placé aussi près que possible de la vanne de purge VP.

Lorsque le vide est établi dans la totalité du circuit de distribution 24 (pression sensiblement égale à 10 mbar), les distributeurs D1, D2 sont commandés pour passer de l'état de dérivation à l'état de repos, et la deuxième vanne V2 d'isolement est ouverte. La pompe de remplissage 6 de la source d'alimentation en fluide hydraulique 3 est ensuite mise en route avec une régulation de pression tarée au minimum alors que le générateur de vide 2 est toujours en cours de fonctionnement. De cette manière, le circuit basse pression BP et la portion du circuit haute pression HP avec laquelle la source d'alimentation en fluide hydraulique communique lorsque le distributeur D1 est à l'état de repos se remplissent naturellement de fluide hydraulique H.

Afin de remplir la totalité du circuit haute pression HP, le distributeurs D1 puis le distributeur D2 sont commandés pour passer de l'état repos à l'état commandé.

Dans le cas où le séparateur liquide/gaz 5 est plein, la fermeture de la première vanne V1 d'isolement et l'ouverture de la troisième vanne V3 d'isolement permettent de le vider. La fin du remplissage du circuit de distribution 24 est déterminée par le remplissage récurrent du séparateur liquide/gaz 5.

Lorsque la totalité du circuit de distribution 24 est remplie de fluide hydraulique H, la première vanne V1 d'isolement est fermée puis la troisième vanne V3 d'isolement est ouverte pour contourner le générateur de vide 2 et augmenter la pression de fluide hydraulique H contenu dans le circuit de distribution 24 jusqu'à la pression déterminée à l'aide du régulateur de pression 11 et du manomètre 10.

Une fois que le fluide hydraulique H a atteint la pression prédéterminée dans la totalité du circuit de distribution 24, la vanne de purge VP et la vanne de remplissage VR sont fermées. Le processus de remplissage du système électro-hydrostatique 20 est alors terminé. Le système électro-hydrostatique 20 peut dès lors être déconnecté du dispositif de remplissage 1.

Le remplissage du système électro-hydrostatique 20 dure environ quinze minutes. La durée dépend notamment de la longueur du circuit de distribution 24, de la taille des vérins 22.1, 22.2, 22.3, de la puissance de la pompe de remplissage 6....

On notera que :
- les clapets anti-retour CV1 et CV3 permettent de maintenir la pression du fluide hydraulique H contenu dans le circuit de distribution 24 lorsque la pompe de remplissage 6 n'est pas en fonctionnement ; et
- le clapet anti-retour CV2 permet de forcer la circulation du fluide hydraulique H vers le régulateur de pression 11 et le filtre 9.

Bien entendu, l'invention n'est pas limitée aux modes de réalisation décrits mais englobe toute variante entrant dans le champ de l'invention telle que définie par les revendications.

Le dispositif de remplissage peut être monté sur un chariot mobile pour permettre son installation au plus près du système électro-hydrostatique.

Le chariot peut avantageusement être un chariot élévateur, notamment dans le cas où le système électro-hydrostatique se trouve en hauteur (gouvernail, aileron ...).

Bien qu'ici les distributeurs D1, D2 soient monostables, ils peuvent être de nature différente (bistables...)

Le système électro-hydrostatique n'est pas nécessairement pourvu de distributeur, ce qui simplifie le procédé de remplissage.

Bien qu'ici le procédé de remplissage soit manuel, il peut être automatisé en utilisant notamment des capteurs et des vannes d'isolement électroniques reliés à une unité de commande.

Selon leur architecture et leur emplacement, les vérins peuvent être équipés de vanne de purge.

Le nombre de vérin peut être inférieur ou supérieur à trois. Le système électro-hydrostatique peut notamment ne comprendre qu'un ou deux vérins.

Les vérins peuvent être de nature différente que celle illustrée (vérin simple effet...) et ne sont pas forcément identiques.

## Revendications

1. Procédé de remplissage d'un circuit hydraulique (24) d'un système électro-hydrostatique (20) pourvu d'une vanne de purge (VP) et d'une vanne de remplissage (VR), le procédé mettant en oeuvre un dispositif de remplissage (1) comprenant :
- un générateur de vide (2) agencé pour être raccordé par une première vanne d'isolement (V1) à la vanne de purge pour éliminer l'air ou les gaz présents dans le circuit ; et
- une source d'alimentation en fluide hydraulique (3) sous pression agencée pour être raccordée par une deuxième vanne d'isolement (V2) à la vanne de remplissage, et par une troisième vanne d'isolement (V3) à la vanne de purge et à la première vanne d'isolement pour remplir le circuit de fluide hydraulique,
et le procédé comprenant les étapes suivantes :
- raccorder la première et la troisième vanne d'isolement (V1, V3) à la vanne de purge (VP), et raccorder la deuxième vanne d'isolement (V2) à la vanne de remplissage (VR) ;
- alors que les deuxième et troisième vannes d'isolement sont fermées, ouvrir la vanne de remplissage, la vanne de purge et la première vanne d'isolement et mettre en fonctionnement le générateur de vide (2) ;
- une fois le vide établi dans le circuit, ouvrir la deuxième vanne d'isolement de manière à remplir le circuit de fluide hydraulique sous pression alors que le générateur de vide est toujours en cours fonctionnement ;
- une fois le circuit rempli de fluide, fermer la première vanne d'isolement puis ouvrir la troisième vanne d'isolement pour contourner le générateur de vide et faire circuler le fluide à travers le système électro-hydrostatique jusqu'à ce que le fluide contenu dans le circuit atteigne une pression prédéterminée ;
- fermer la vanne de purge et la vanne de remplissage.

2. Procédé selon la revendication 1, dans lequel le système électro-hydrostatique (20) comprend une pluralité d'actionneurs sélectionnables par au moins deux distributeurs (D1, D2), et comprenant l'étape de piloter successivement les distributeurs les uns après les autres pour établir le vide dans le circuit hydraulique (24), et l'étape de piloter les distributeurs selon une séquence prédéterminée pour remplir le circuit hydraulique.

3. Procédé selon la revendication 1 ou 2, dans lequel le générateur de vide (2) comporte une pompe à vide (4) reliée à la première vanne d'isolement par un séparateur liquide/gaz (5).

4. Procédé selon l'une quelconque des revendications précédentes, dans lequel la source d'alimentation en fluide hydraulique (3) comprend une pompe de remplissage (6) reliée à un réservoir (8) d'une contenance supérieure à celle du circuit hydraulique (24) du système électro-hydrostatique.

5. Procédé selon l'une quelconque des revendications précédentes, dans lequel le générateur de vide (2) et la source d'alimentation en fluide hydraulique (3) sont montés sur un chariot mobile.

6. Procédé selon la revendication 5, dans lequel le chariot est un chariot élévateur.

## Patentansprüche

1. Verfahren zum Befüllen eines Hydraulikkreislaufs (24) eines elektro-hydrostatischen Systems (20), das mit einem Auslassventil (VP) und mit einem Befüllventil (VR) versehen ist, wobei das Verfahren eine Befüllvorrichtung (1) einsetzt, die umfasst:
- einen Vakuumerzeuger (2), der ausgebildet ist, über ein erstes Absperrventil (V1) mit dem Auslassventil verbunden zu werden, um die Luft oder Gase, die in dem Kreislauf vorhanden sind, zu beseitigen; und
- eine Quelle (3) zur Versorgung mit unter Druck stehendem Hydraulikfluid, die ausgebildet ist, über ein zweites Absperrventil (V2) mit dem Befüllventil und über ein drittes Absperrventil (V3) mit dem Auslassventil und mit dem ersten Absperrventil verbunden zu werden, um den Hydraulikfluidkreislauf zu befüllen,
und wobei das Verfahren die folgenden Schritte umfasst:
- Verbinden des ersten und des dritten Absperrventils (V1, V3) mit dem Auslassventil (VP) und Verbinden des zweiten Absperrventils (V2) mit dem Befüllventil (VR);
- während das zweite und das dritte Absperrventil geschlossen sind, Öffnen des Befüllventils, des Auslassventils und des ersten Absperrventils und Inbetriebnehmen des Vakuumerzeugers (2);
- sobald das Vakuum in dem Kreislauf erzeugt worden ist, Öffnen des zweiten Absperrventils, um den Kreislauf mit unter Druck stehendem Hydraulikfluid zu befüllen, während der Vakuumerzeuger immer noch in Betrieb ist;
- sobald der Kreislauf mit Fluid gefüllt worden ist, Schließen des ersten Absperrventils, daraufhin Öffnen des dritten Absperrventils, um den Vakuumerzeuger zu umgehen und das Fluid durch das elektro-hydrostatische System fließen zu lassen, bis das in dem Kreislauf enthaltene Fluid einen vorbestimmten Druck erreicht;
- Schließen des Auslassventils und des Befüllventils.

2. Verfahren nach Anspruch 1, bei dem das elektro-hydrostatische System (20) eine Vielzahl von Aktoren umfasst, die durch mindestens zwei Verteiler (D1, D2) auswählbar sind, und den Schritt des sukzessiven Steuerns der Verteiler nacheinander umfasst, um das Vakuum in dem Hydraulickreis (24) zu erzeugen, sowie den Schritt des Steuerns der Verteiler gemäß einer vorbestimmten Reihenfolge, um den Hydraulikkreis zu befüllen.

3. Verfahren nach Anspruch 1 oder 2, bei dem der Vakuumerzeuger (2) eine Vakuumpumpe (4) umfasst, die mit dem ersten Absperrventil über einen Gas-Flüssigkeits-Abscheider (5) verbunden ist.

4. Verfahren nach einem der vorhergehenden Ansprüche, bei dem die Quelle (3) zur Versorgung mit Hydraulikfluid eine Befüllpumpe (6) umfasst, die mit einem Behälter (8) mit einem Fassungsvermögen verbunden ist, das größer als das des Hydraulikkreislaufs (24) des elektro-hydrostatischen Systems ist.

5. Verfahren nach einem der vorhergehenden Ansprüche, bei dem der Vakuumerzeuger (2) und die Hydraulikfluidversorgungsquelle (3) auf einem beweglichen Wagen montiert sind.

6. Verfahren nach Anspruch 5, bei dem der Wagen ein Hubwagen ist.

## Claims

1. A method for filling a hydraulic circuit (24) of an electro-hydrostatic system (20) provided with a discharge valve (VP) and a filling valve (VR), the method using a filling device (1) comprising:
a vacuum generator (2) designed to be connected to the discharge valve via a first shut-off valve (V1) in order to eliminate the air or gases present in the circuit, and
a source for supplying pressurised hydraulic fluid (3), which source is designed to be connected to the filling valve via a second shut-off valve (V2) and to the discharge valve and the first shut-off valve via a third shut-off valve (V3) in order to fill the hydraulic fluid circuit,
and the method comprising the following steps:
connect the first and third shut-off valves (V1, V3) to the discharge valve (VP), and connect the second (V2) shut-off valve to the filling (VR) valve;
while the second and third shut-off valves are closed, open the filling valve, the discharge valve and the first shut-off valve and operate the vacuum generator (2);
once the vacuum has been established in the circuit, open the second shut-off valve in order to fill the circuit with pressurised hydraulic fluid while the vacuum generator is still in operation;
once the circuit has been filled with fluid, close the first shut-off valve and then open the third shut-off valve in order to bypass the vacuum generator and circulate the fluid through the electro-hydrostatic system until the fluid contained in the circuit reaches a predetermined pressure;
close the discharge valve and the filling valve.

2. The method according to Claim 1, wherein the electro-hydrostatic system (20) comprises a plurality of actuators selectable by at least two distributors (D1, D2), and comprising the step of successively controlling the distributors one after another in order to establish the vacuum in the hydraulic circuit (24), and the step of controlling the distributors according to a predetermined sequence in order to fill the hydraulic circuit.

3. The method according to Claim 1 or Claim 2, wherein the vacuum generator (2) comprises a vacuum pump (4) connected to the first shut-off valve by a liquid/gas separator (5).

4. The method according to any one of the preceding claims, wherein the hydraulic fluid supply source (3) comprises a filling pump (6) connected to a reservoir with a capacity greater than that of the hydraulic circuit (24) of the electro-hydrostatic system.

5. The method according to any one of the preceding claims, wherein the vacuum generator (2) and the hydraulic fluid supply source (3) are mounted on a mobile carriage.

6. The measurement method according to Claim 5, wherein the carriage is a forklift.
